# EUROPEAN PATENT SPECIFICATION

(11) **EP 0 443 372 B1**
(45) Date of publication and mention of the grant of the patent: **17.04.1996**
(21) Application number: 91101676.4
(22) Date of filing: 07.02.1991
(51) Int. Cl.: G03B 42/04

(54) **Method of identifying X-ray film with patient data**
Verfahren zur Identifizierung eines Röntgenfilms mit Patientendaten
Méthode d'identification de film à rayons-X portant des données de patients

(30) Priority: 20.02.1990 DE 4005218
(43) Date of publication of application: 28.08.1991
(73) Proprietor: EASTMAN KODAK COMPANY, Rochester, New York 14650-2201 (US); KODAK AKTIENGESELLSCHAFT, D-70323 Stuttgart (DE)
(72) Inventor: Ort, Wolfgang, c/o KODAK AKTIENGESELLSCHAFT, D-70323 Stuttgart (DE)
(74) Representative: Lewandowsky, Klaus, Dipl.-Ing.

(56) References cited:
- EP-A- 0 079 557
- EP-A- 0 110 292
- EP-A- 0 216 287
- WO-A-89/06377
- PATENT ABSTRACTS OF JAPAN vol. 14, no. 31 (P-993)(3974) 22 January 1990 & JP-A-1 270 045
- Translation into English of JP-A-1 270 045

## Description

The invention relates to a method of identifying X-ray film with patient data according to the preamble of claim 1.

DE-C 29 46 078 discloses a method wherein an X-ray film cassette is used which has a window which can be closed in a light-tight manner, as known e.g. of a commercially available X-O-matic cassette.

In the case of that method, wherein the identifying exposure is carried out by means of a projection unit through the open cassette window, the film can be incorrectly identified in that the wrong data carrier is erroneously supplied to the projection unit or in that the operator erroneously inserts into the projection unit an incorrect film cassette which does not belong to the data carrier located in the projection unit.

Patent Abstract of Japan Vol. 14 No. 31 (P-993) 3974 corresponding to JP-A-1 270 045 discloses a method of identifying an X-ray film with patient data using an X-ray film cassette and a light emitting patient data display unit inside the cassette. An external signal input device reads signals representing information about a patient from a recording medium such as a magnetic card and outputs this information via contacts on the cassette to the display unit onto the already exposed X-ray film inside the cassette. Another LCD unit installed outside the cassette displaying the identical information as the LCD unit inside the cassette during the connection of the cassette to the external signal input device permits a visual control of the information to be copied onto the film by an operator. This means that an identification of the cassette is not possible if the cassette is not connected to the signal input device. Therefore, a visual confirmation of the information about the patient displayed by the LCD-unit by an operator is only possible before or during copying the information onto the X-ray film inside the cassette. EP-A-0 110 292 discloses an unloading and loading apparatus for x-ray film cassettes which includes an exposure station for an image-wise identification exposure of the x-ray film of the open cassette.

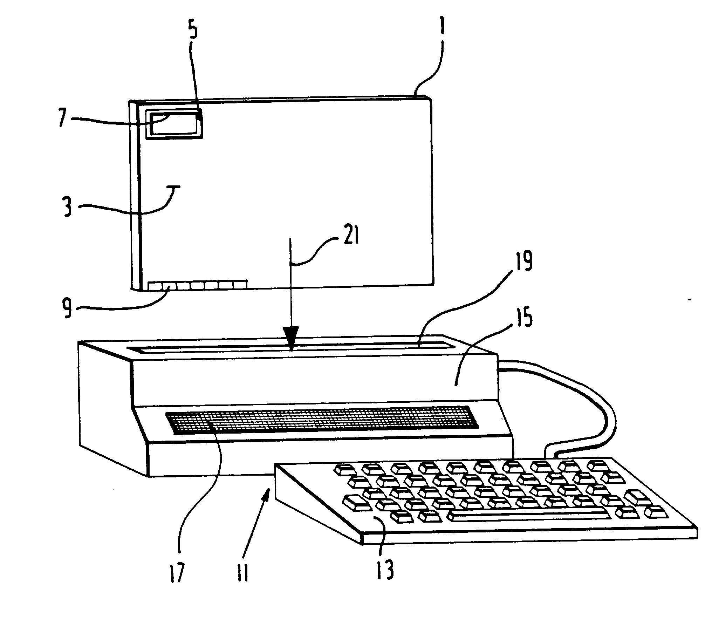

This apparatus is equipped with an optical data projection system to project the data of a patient's ID-card 406 to the film 328 (see Fig. 11). This document is not appropriate to attain the object of the captioned application defined in the enclosed amended claims with respect to a maximum protection against incorrect identification. In using a patient ID-card 406, the film can be incorrectly identified in that the wrong ID-card is erroneously supplied to the projection unit or in that the operator erroneously inserts into the projection unit an incorrect film cassette which does not belong to the ID-card located in the projection unit.

It is the object of the invention to provide an identification method of the type concerned which offers maximum protection against incorrect identification.

In accordance with the invention this object is attained in a method of the above-mentioned type as specified in claim 1. Modifications are set forth in the dependent claims 2 to 7.

By using, in accordance with the invention, a cassette which contains the data carrier as an integral component the danger is excluded of the data carrier and the cassette being incorrectly associated. Since moreover the data carrier used is an LCD-unit addressable from the exterior of the cassette a further possible source of error can be excluded which consists in that a set of data is read into the data carrier which is not adapted for the cassette concerned. This danger is avoided in the case of the invention because the patient data can be read into the LCD unit directly during actual use in that exterior control contacts of the cassette are addressed for reading in of the data while the cassette is positioned in an X-ray apparatus for the radiographic exposure of a part of the body of the patient. For this purpose the X-ray or radiographic apparatus may have on its cassette chamber a contacting means which cooperates with the control contacts of the cassette.

Due to a feature of the invention, namely of the data being machine-read from the data carrier and used for the identification exposure of the X-ray film, a further source of error in the case of the prior art which consists of incorrectly associated data being recorded during the identification exposure, is also excluded by the invention.

In the case of a liquid crystal with a nemetic phase, the memory characteristic of the LCD-unit can be attained by a withstand voltage which is made available by a power supply provided on the cassette, for example, a small built-in battery.

The use of an LCD-unit with a smectic phase (type SMECTIC A) which has memory characteristics is particularly advantageous. In such a case no batteries are required in the cassette in order to secure the data read in by addressing the cassette from outside. The data can be read out until the LCD-unit is addressed once again for the erasure of the data.

If a cassette is used in which the LCD-unit is visible on the outside wall an additional advantage is attained; the data read in form a mark on the cassette which is visible from outside. When the data are read in in the course of a radiographic exposure, the operator can see immediately whether the X-ray film located in the cassette has already been exposed, which is the case if data are displayed by the LCD-unit.

Depending on the organization of the hospital or doctor's office, the data can be read into the LCD-unit in different ways. If the patient data are, e.g. stored in the PC system of the hospital, the set of data can be retrieved from the PC terminal when an X-ray exposure is made and read into the film cassette placed in the X-ray apparatus. If, on the other hand, each patient has a patient ID-card, a card reader can be provided in connection with the X-ray apparatus. The patient's ID card is inserted into the card reader which reads the set of data into the LCD-unit of the cassette, for example, by reading out a magnetic strip or the like on said ID card. The control can be such that the X-ray exposure can be actuated only after, or only simultaneously with, the reading in of the set of data.

It also exists an X-ray film cassette with a data carrier into which patient data can be read, said cassette being suitable in particular for carrying out the method according to the invention. This is attained in that the data carrier of said cassette is an LCD-unit having memory characteristics (type SMECTIC A) and in that control contacts accessible from the outside wall of the cassette are provided by which the LCD-unit can be addressed from the exterior of the cassette for the reading in, and erasure of, patient data.

The LCD-unit is preferably located on the outer wall of the cassette such that the data read in are visible on the outer side of the cassette.

Moreover an unloading and loading apparatus for X-ray film cassettes with a patient data carrier is suitable for carrying out the method according to the invention and having a light-tight inner space as well as means for opening X-ray film cassettes located in said inner space, means for removing the exposed X-ray film from the open cassette, means for inserting another X-ray film into the open cassette, and means for developing the X-ray film removed from the cassette.

Such an unloading and loading contains an exposure station for imagewise identification exposure of the X-ray film of the open cassette and in that the exposure station is controllable by control signals of a data reading apparatus by means of which the patient data can be read out from the data carrier of the cassettes.

The data reading apparatus used may be a conventional type of scanner. Preferably a scanner means is used by which alphanumerical data can be read out from the LCD-unit which forms the data carrier of the cassettes.

The exposure station of the unloading and loading apparatus may include a writing head with an LCD-unit controllable by control signals of the scanner means for imagewise identification exposure of the X-ray film.

The invention will now be described in further detail with reference to the drawing.

The single figure shows a perspective and schematically simplified view of an X-ray film cassette comprising a data carrier as well as a means for reading in patient data into said data carrier of the cassette.

Disregarding the special type and arrangement of the associated data carrier, an X-ray film cassette 1 is designed in the way typical of such cassettes. It has a cassette housing which can be opened and closed and in the interior of which an X-ray film, possibly with intensifying screens, can be accommodated in a light-tight manner. In one corner of the broad side of cassette 1, a data carrier in the form of an LCD-unit 5 is arranged on the outer wall 3 such that its display 7 is visible from the exterior of the cassette without an opening being provided in the outer wall 3. The LCD-unit 5 is of the type having memory characteristics. Such characteristics are exhibited by an LCD-unit of the SMECTIC A type as used in the case of the present embodiment.

In the case of such an LCD-unit, a crystal orientation caused by electric addressing is maintained even after the control voltage has been switched off. The information read in and stored due to the unchanged crystal orientation is erased when the unit is again electrically addressed by a voltage of opposite polarity. In order that the LCD-unit 5 can be addressed and data can be read into it, which appear in the rectangular display 7, and in order that the data read in can be erased, the LCD-unit 5 comprises a number of control contacts 9 which are accessible at the edge of the outer wall 3 of the cassette 1, i.e. contacted from the exterior of the cassette. The control contacts 9 are associated with a suitable display matrix of display 7 which e.g. allows the data to be alphanumerically represented by means of a seven segment display or a dot matrix.

Thanks to the memory characteristics of the LCD-unit 5 no power supply (battery) for the LCD-unit 5 is required on or in cassette 1 because as was mentioned before, the data read in are maintained in the display 7 after the LCD-unit has been addressed via the control contacts 9, until it is again addressed via the control contacts 9 with an erasing voltage.

A data processing unit generally denoted 11 comprises a data input keyboard 13 of the usual type as well as a read-in unit 15. The latter includes a temporary storage means as commonly used in data processing units, said data storage means being adapted to receive a plurality of lines of data, as well as an LED display field 17 in which the data of the temporary storage means are visible. Moreover the unit 15 has an insertion slot 19 into which cassette 1 can be inserted as shown by an arrow 21 in the Fig. When the cassette is inserted the control contacts 9 are brought into contact with complementary contact pieces of unit 15, through which the LCD-unit 5 is addressed such that the data entered into unit 15 and visible in the display field 17 are read into the LCD-unit 5 by means of a control device (controller) which is located in unit 15 and adapted for the LCD-unit 5 so that the data are visible in display 7. They remain visible even after cassette 1 has been withdrawn from slot 19. After cassette 1 has been radiographically exposed in an X-ray apparatus for the medical purpose desired, cassette 1 is transferred in the usual manner to an unloading and loading apparatus. In the light-tight inner space of said apparatus, cassette 1 is opened for unloading of the exposed X-ray film, whereupon the exposed X-ray film is transmitted to a processor unit for development, and another X-ray film is inserted into the cassette before the cassette is closed again and dispensed from the unloading and loading apparatus for another use. An example of such apparatus which are also known as multiloaders is commercially available under the designation "Multiloader 700", see for instance DE-A-37 16 904. Since the unloading and loading apparatus to be used for carrying out the invention corresponds more or less to the multiloaders commonly used, it has not been illustrated in the drawing.

The unloading and loading apparatus differs from the commonly used multiloaders only in that it includes the following additional means for carrying out the invention:
a) a scanner unit serving as a data-reading apparatus
b) an exposure station, and
c) an erasing station.

The data-reading apparatus is a conventional type of scanner by which the data in the display 7 of the LCD-unit 5 can be read out and converted into electric control signals. The scanner may be arranged at the insertion slot of the unloading and loading apparatus such that the display 7 is scanned when cassette 1 moves into the unloading and loading apparatus.

The exposure station preferably comprises an LED-writing unit controllable by the control signals of the scanner for imagewise exposure of the X-ray film. The writing unit is preferably associated with the cassette-opening mechanism provided in the unloading and loading apparatus and, after opening of the cassette, temporarily contacts the X-ray film for exposure.

The erasing station is arranged such that cassette 1 before being loaded with another X-ray film and dispensed from the unloading and loading apparatus, is placed with its control contacts 9 into contact with erasing contact pieces of the erasing station whereby the data in display 7 of the LCD-unit 5 are erased.

Unit 15 provided for reading the patient data into the LCD-unit 5 of cassette 1 can be held in a data-transferring connection with the PC terminal of the X-ray department concerned and thus replace keyboard 13 if the patient data are filed in a central computer system of the hospital. If, on the other hand, each patient has his/her own patient ID card, the keyboard 13 can be replaced by a card-reading unit into which the patient ID card is inserted prior to X-ray exposure, said ID card possibly having a magnetic strip or some other machine-readable data source.

The unit 15 could be integrated into the X-ray apparatus, i.e. for example associated with the cassette-holding mechanism of an X-ray apparatus so that the reading of patient data into the LCD-unit 5 could take place directly during the X-ray treatment.

The above description and the drawing are confined to features which are essential to illustrate an embodiment of the invention. Inasmuch as such features are disclosed in the description and in the drawing but not mentioned in the claims they also serve if necessary to define the subject matter of the invention.

## Claims

1. Method of identifying X-ray film with patient data, wherein an X-ray film cassette (1) is used with an LCD unit (5) for patient data, which LCD-unit (5) is located on the outer wall of said cassette, is readable from the outside and can be addressed via control contacts (9) accessible at the outer wall (3) of the cassette (1), with control signals which are converted into pattern data for an imagewise identification exposure of the X-ray film, **characterized in that**
- the LCD-unit (5) having memory characteristics is used as a data carrier of the cassette (1),
- the patient data readable in the display (7) of the LCD unit (5) are machine-read by a data reading unit and converted into the control signals, and that
- subsequent to the radiographic X-ray exposure of the cassette (1) the imagewise identification exposure of the X-ray film is controlled by means of the control signals.

2. Method according to claim 1, wherein
- the data reading unit is part of a loading and unloading apparatus into which the radiographically exposed cassette (1) is inserted for unloading the X-ray film, for developing it and for reloading the cassette (1),
- the loading and unloading apparatus comprises an exposure station for the imagewise identification exposure of the radiographically exposed X-ray film of the open cassette (1), and that
- the exposure station is controlled by the control signals of the data reading unit.

3. Method according to claim 1 or 2, further characterized in that an LCD-unit (5) of the SMECTIC A type is used.

4. Method according to one of claims 1 to 3, further characterized in that the LCD-unit (5) is addressed for reading in of the patient data in a spatial connection with the carrying out of the radiographic X-ray exposure of the cassette (1).

5. Method according to one of the claims 1 to 3, further characterized in that the LCD-unit (5) of the cassette (1) is addressed in the unloading and loading apparatus for erasure of patient data previously read in.

6. Method according to one of the claims 1 to 3, further characterized in that the data-reading unit is adapted for reading out alphanumerical data displayed by the LCD-unit (5).

7. Method according to claim 2, further characterized in that the exposure station includes a writing head with an LED-unit controllable by the control signals of the data-reading unit and serving for imagewise identification exposure of the X-ray film.

## Patentansprüche

1. Verfahren zum Kennzeichnen von Röntgenfilmen mit Patientendaten, bei dem eine Röntgenfilmkassette (1) mit einer LCD-Anordnung (5) für Patientendaten verwendet wird, wobei die LCD-Anordnung (5) an der Außenwand der Kassette angeordnet, von außen ablesbar und über von der Außenwand (3) der Kassette (1) zugängliche Steuerkontakte (9) ansteuerbar ist und wobei Steuersignale in die Patientendaten darstellende Muster umsetzbar sind, um eine bildmäßige Kennzeichnungsbelichtung des Röntgenfilms zu bewirken,
**dadurch gekennzeichnet,** daß
- die LCD-Anordnung (5) Speichereigenschaften besitzt und als Datenträger der Kassette (1) dient,
- die von einer Anzeige (7) der LCD-Anordnung (5) ablesbaren Patientendaten mittels eines Datenlesegeräts maschinenlesbar und in die Steuersignale umsetzbar sind und daß
- nach der radiografischen Röntgenbestrahlung der Kassette (1) die bildmäßige Kennzeichnungsbelichtung des Röntgenfilms mittels der Steuersignale steuerbar ist.

2. Verfahren nach Anspruch 1, dadurch gekennzeichnet, daß
- das Datenlesegerät Teil einer Entlade-/Ladevorrichtung ist, in die die radiografisch bestrahlte Kassette (1) zum Entladen des Röntgenfilms, zum Entwickeln desselben und zum Neuladen der Kassette (1) eingegeben wird,
- die Entlade-/Ladevorrichtung eine Belichtungsstation zur bildmäßigen Kennzeichnungsbelichtung des radiografisch bestrahlten Röntgenfilms in der offenen Kassette (1) umfaßt und daß
- die Belichtungsstation von den Steuersignalen des Datenlesegeräts gesteuert wird.

3. Verfahren nach Anspruch 1 oder 2, dadurch gekennzeichnet, daß eine LCD-Anordnung (5) vom Typ SMECTIC-A verwendet wird.

4. Verfahren nach einem der Ansprüche 1 bis 3, dadurch gekennzeichnet, daß die Ansteuerung der LCD-Anordnung (5) zum Einlesen der Patientendaten in räumlichem Zusammenhang mit der Durchführung der radiografischen Röntgenbestrahlung der Kassette (1) durchgeführt wird.

5. Verfahren nach einem der Ansprüche 1 bis 3, dadurch gekennzeichnet, daß die LCD-Anordnung (5) der Kassette (1) in der Entlade-/Ladevorrichtung zum Löschen zuvor eingelesener Patientendaten angesteuert wird.

6. Verfahren nach einem der Ansprüche 1 bis 3, dadurch gekennzeichnet, daß das Datenlesegerät zum Auslesen alphanumerischer, von der LCD-Anordnung (5) angezeigter Daten vorgesehen ist.

7. Verfahren nach Anspruch 2, dadurch gekennzeichnet, daß die Belichtungsstation einen Schreibkopf mit einer durch die Steuersignale des Datenlesegeräts steuerbaren LED-Anordnung zur bildmäßigen Kennzeichnungsbelichtung des Röntgenfilms aufweist.

## Revendications

1. Procédé d'identification d'un film à rayons-x portant des données de patient, dans lequel une cassette de film à rayons-x (1) est utilisée en association avec une unité LCD (5) pour les données du patient, laquelle unité - LCD (5) étant située sur la paroi extérieure de ladite cassette, peut être lue de l'extérieur et peut être adressée via des contacts de commande (9) accessibles au niveau de la paroi extérieure (3) de la cassette (1), par des signaux de commande qui sont convertis en données d'identification pour une exposition d'identification conforme à l'image du film à rayons-x, caractérisée en ce que :
- l'unité LCD (5) possédant des caractéristiques de mémoire est utilisée comme support d'informations de la cassette (1)
- les données de patients qui peuvent être écrites dans l'affichage (7) de l'unité LCD (5) sont lues par une unité de lecture de données puis converties en signaux de commande et en ce que :
- après l'exposition radiographique aux rayons-x de la cassette (1) l'exposition d'identification conforme à l'image du film à rayons-x est commandée au moyen des signaux de commande.

2. Procédé selon la revendication 1, dans lequel :
- l'unité de lecture de données fait partie d'un dispositif de chargement et de déchargement dans lequel la cassette (1) exposée radiographiquement est insérée pour permettre le déchargement du film à rayons-x, le développement de celui-ci ainsi que le rechargement de la cassette (1),
- l'appareil de chargement et de déchargement comprend une station d'exposition permettant l'exposition d'identification conforme à l'image du film à rayons-x exposée radiographiquement de la cassette (1) ouverte, et en ce que
- la station d'exposition est commandée par les signaux de commande de l'unité de lecture de données.

3. Procédé selon la revendication 1 ou 2, caractérisé, en outre, en ce qu'une unité LCD (5) du type SMECTIQUE A est utilisée.

4. Procédé selon l'une quelconque des revendications 1 à 3, caractérisé en outre en ce que l'unité LCD (5) est adressée pour l'écriture des données du patient en liaison spatiale avec la mise en oeuvre de l'exposition aux rayons-x radiographique de la cassette (1).

5. Procédé selon l'une quelconque des revendications 1 à 3, caractérisé en outre en ce que l'unité LCD (5) de la cassette (1) est adressée dans le dispositif de chargement et de déchargement pour l'effacement des données du patient qui y ont été préalablement écrites.

6. Procédé selon l'une quelconque des revendications 1 à 3, caractérisé en outre en ce que l'unité de lecture de données est conçue pour l'extraction des données alphanumériques affichées par l'unité LCD (5).

7. Procédé selon la revendication 2, caractérisé en outre en ce que la station d'exposition comprend une tête d'écriture comportant une unité à diodes électroluminescentes (DEL) qui peut être commandée par les signaux de commande de l'unité de lecture de données et servant pour l'exposition d'identification conforme à l'image du film à rayons-x.
